# EUROPEAN PATENT SPECIFICATION

(11) **EP 3 444 141 B1**
(45) Date of publication and mention of the grant of the patent: **13.12.2023**
(21) Application number: 18188649.0
(22) Date of filing: 13.08.2018
(51) Int. Cl.: B60L 3/00, B60L 15/20

(54) **METHOD AND APPARATUS FOR SAFETY CONTROL OF ELECTRIC MOVING VEHICLE**
VERFAHREN UND VORRICHTUNG ZUR SICHERHEITSSTEUERUNG EINES ELEKTRISCHEN FAHRZEUGS
PROCÉDÉ ET APPAREIL DE COMMANDE DE SÉCURITÉ D'UN VÉHICULE MOBILE ÉLECTRIQUE

(30) Priority: 14.08.2017 KR 20170102896
(43) Date of publication of application: 20.02.2019
(73) Proprietor: Naver Labs Corporation, Gyeonggi-do (KR)
(72) Inventor: Chung, Jinwon, Gyeonggi-do (KR); Yu, Donghun, Gyeonggi-do (KR); Seo, Joonho, Gyeonggi-do (KR); Seok, Sangok, Gyeonggi-do (KR)
(74) Representative: V.O.

(56) References cited:
- EP-A1- 3 153 147
- WO-A1-2016/158558
- KR-A- 20140 136 636
- US-A1- 2014 246 261

## Description

### BACKGROUND

### 1. Field of the Invention

The following description of example embodiments relates to a technology for stopping driving of a moving vehicle.

### 2. Description of the Related Art

As background, EP3153147A1 describes an electric vehicle and control method thereof; WO2016/158558A1 describes a walking assistance vehicle and program for control of walking assistance vehicle; US 2014 0246261 A1 describes an electric assist cart

Currently, moving vehicles are used to carry goods for various purposes in various fields, such as, for example, shopping malls, home delivery services, and industrial sites.

For example, Korean Utility Model Registration NO. 20-0440927 registered on July 2, 2008, discloses a structure of a transportation vehicle used to move, for example, packing boxes at a short distance in a warehouse or a distribution center. For example, Korean patent application NO. 20140136636A describes an apparatus and method for controlling a shopping cart.

When heavy goods are loaded on a moving vehicle, a user needs to use a considerable amount of force to move the moving vehicle. Further, it becomes more difficulty for the user to control the moving vehicle to move in a desired direction by appropriately operating the loaded moving vehicle and the user may need to experience a significant difficulty in transporting the goods.

Accordingly, attempts have been made to provide a method of providing a motor to a moving vehicle and driving the motor to move the moving vehicle.

### SUMMARY

The scope of this patent is defined by the independent claims.

At least one example embodiment provides a safety control method and apparatus that may enhance an energy efficiency of a moving vehicle for stopping driving of the moving vehicle if a user manipulation is absent, that is, if the user is not manipulating the moving vehicle.

According to an aspect of at least one example embodiment, there is provided a safety control method of an electric moving vehicle, the safety control method including determining whether a user manipulation is present based on presence or absence of a user input on the electric moving vehicle; and braking an electric motor that drives a wheel of the electric moving vehicle using a softlock scheme of short-circuiting an electrode of the electric motor, instead of applying power to the electric motor, in response to the user manipulation determined to be absent.

The softlock scheme may use a short brake phenomenon that a brake with a predetermined force is applied using a counter electromotive force occurring in response to short-circuiting the electrode of the electric motor.

The braking includes applying the softlock scheme to the electric motor in response to the user manipulation determined to be absent.. The braking may further include applying a hardlock scheme of supplying power required for braking to the electric motor and forcibly braking the electric motor in response to a movement of the electric moving vehicle determined to be present in a state in which the user manipulation is absent while applying the softlock scheme.

The braking may include determining whether the electric moving vehicle is located on a flatland or a slope based on a gradient of the electric moving vehicle in response to the user manipulation determined to be absent; applying the softlock scheme to the electric motor in response to the electric moving vehicle determined to be located on the flatland; and applying a hardlock scheme of applying power required for braking to the electric motor and forcibly braking the electric motor in response to the electric moving vehicle determined to be located on the slope.

The hardlock scheme may control a moving speed of the electric motor to reach zero by configuring a feedback loop.

The determining may include determining whether the user manipulation is present by measuring an amount of force applied to the electric moving vehicle.

The electric moving vehicle is configured as a moving transportation structure on which a user is boarded.

According to an aspect of at least one example embodiment, there is provided a safety control apparatus of an electric moving vehicle, the safety control apparatus including a manipulation detector configured to determine whether a user manipulation is present based on presence or absence of a user input on the electric moving vehicle; and a controller configured to brake an electric motor that drives a wheel of the electric moving vehicle using a softlock scheme of short-circuiting an electrode of the electric motor, instead of applying power to the electric motor, in response to the user manipulation determined to be absent.

According to some example embodiments, it is possible to enhance an energy efficiency of an electric moving vehicle by effectively controlling an amount of power consumed by a brake for stopping driving of the electric moving vehicle if a user manipulation is absent, that is, if the user is not manipulating the electric moving vehicle.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a perspective view of an electric moving vehicle according to an example embodiment;
FIG. 2 is a diagram illustrating a configuration of an electric moving vehicle according to an example embodiment;
FIG. 3 illustrates an example of a process of transferring a force applied by a user in an electric moving vehicle according to an example embodiment;
FIGS. 4 through 6 illustrate examples of a process of driving an electric moving vehicle based on a force applied by a user in the electric moving vehicle according to an example embodiment;
FIG. 7 is a diagram illustrating a configuration of components includable in a safety control apparatus according to an example embodiment;
FIG. 8 is a flowchart illustrating an example of a safety control method of an electric moving vehicle performed by a safety control apparatus according to an example embodiment; and
FIG. 9 is a flowchart illustrating another example of a safety control method of an electric moving vehicle performed by a safety control apparatus according to an example embodiment.

### DETAILED DESCRIPTION

One or more example embodiments will be described in detail with reference to the accompanying drawings. Example embodiments, however, may be embodied in various different forms, and should not be construed as being limited to only the illustrated embodiments. Rather, the illustrated embodiments are provided as examples so that this disclosure will be thorough and complete, and will fully convey the concepts of this disclosure to those skilled in the art. Accordingly, known processes, elements, and techniques, may not be described with respect to some example embodiments. Unless otherwise noted, like reference characters denote like elements throughout the attached drawings and written description, and thus descriptions will not be repeated.

Although the terms "first," "second," "third," etc., may be used herein to describe various elements, components, regions, layers, and/or sections, these elements, components, regions, layers, and/or sections, should not be limited by these terms. These terms are only used to distinguish one element, component, region, layer, or section, from another region, layer, or section. Thus, a first element, component, region, layer, or section, discussed below may be termed a second element, component, region, layer, or section, without departing from the scope of this disclosure.

As used herein, the singular forms "a," "an," and "the," are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups, thereof. As used herein, the term "and/or" includes any and all combinations of one or more of the associated listed items.

Unless otherwise defined, all terms (including technical and scientific terms) used herein have the same meaning as commonly understood by one of ordinary skill in the art to which example embodiments belong. Terms, such as those defined in commonly used dictionaries, should be interpreted as having a meaning that is consistent with their meaning in the context of the relevant art and/or this disclosure, and should not be interpreted in an idealized or overly formal sense unless expressly so defined herein.

Hereinafter, example embodiments will be described with reference to the accompanying drawings.

The example embodiments relate to a safety control method and apparatus that may enhance an energy efficiency of an electric moving vehicle.

The example embodiments disclosed herein may achieve many advantages in terms of an energy efficiency and cost saving, etc., of an electric moving vehicle.

The term "electric moving vehicle" used herein may inclusively indicate a transportation device of goods and a transportation device in a structure on which a person, for example, a user is boarded. If the electric moving device is for boarding a person, the electric moving device may include, for example, an electric wheelchair, an electric moving bed, an electric stroller, and an electric wagon. Hereinafter, the example embodiments will be described using the transportation device of goods as a representative example, however, are not limited thereto.

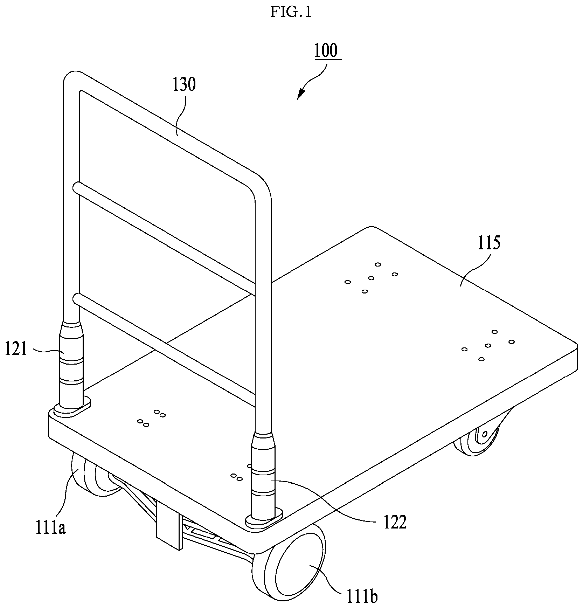

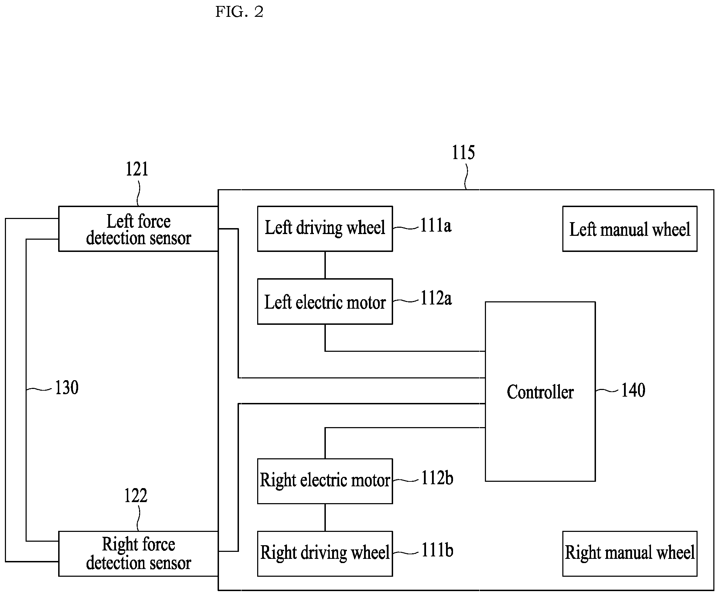

FIG. 1 is a perspective view of an electric moving vehicle according to an example embodiment, and FIG. 2 is a diagram illustrating a configuration of an electric moving vehicle according to an example embodiment.

Hereinafter, an electric moving vehicle 100 according to an example embodiment is described with reference to FIGS. 1 and 2.

Referring to FIGS. 1 and 2, the electric moving vehicle 100 is configured to load goods to be transported and move the loaded goods, and includes a single pair of driving wheels including a left driving wheel 111a and a right driving wheel 11 1b provided on the left and the right, respectively, and a single pair of electric motors including a left electric motor 112a and a right electric motor 112b configured to drive the left driving wheel 111a and the right driving wheel 11 1b, respectively, and a body configured as a deckboard 115 configured to load goods to be transported.

The electric moving vehicle 100 further includes a grip 130 provided at one side of the body, a single pair of force detection sensors including a left force detection sensor 121 and a right force detection sensor 122 provided between a lower portion of left and right ends of the grip 130 and an upper portion of the deckboard 115 and configured to detect a force transferred from the user to the body through the grip 130, and a controller 140 configured to control driving of the left electric motor 112a and the right electric motor 112b based on the force transferred to the body.

Although not illustrated in detail, the electric moving vehicle 100 may basically include a chargeable battery. Here, the battery may supply power required for the electric moving vehicle 100, including driving of the left electric motor 112a and the right electric motor 112b under control of the controller 140.

According to the above configuration, the electric moving vehicle 100 may move desired goods to a desired location conveniently in such a manner that the goods to be transported are loaded on the deckboard 115 of the body and the left driving wheel 111a and the right driving wheel 111b are driven by the left electric motor 112a and the right electric motor 112b, respectively.

In the electric moving vehicle 100, the grip 130 holdable by the user is provided on one side of the body. Accordingly, the user may apply a force in a direction in which the goods are to be transported with holding the grip 130 of the electric moving vehicle 100.

In the electric moving vehicle 100, the force detection sensors including the left and right force detection sensors 121 and 122 are provided between the left and right ends of the grip 130. Here, each of the left force detection sensor 121 and the right force detection sensor 122 detects the force applied by the user to the grip 130 and transferred to the body. Here, the left and right force detection sensors 121 and 122 may include a loadcell. In addition, a variety of sensors capable of measuring a force, such as a strain gauge, may be used.

Referring to FIG. 1, the left force detection sensor 121 and the right force detection sensor 122 are provided on the left and the right, respectively, at one upper side of the deckboard 115 on which goods to be transported are to be loaded. Accordingly, the left and right force detection sensors 121 and 122 accurately and effectively detect the force applied by the user to the grip 130 and transferred to the body.

In the aforementioned electric moving vehicle 100, a single pair of force detection sensors including the left force detection sensor 121 and the right force detection sensor 122 are provided between the left and right ends of the grip 130 and the deckboard 115 instead of being provided at an upper end of the grip 13, such that the user may control the electric moving vehicle 100 based on not a fixed location of the grip 130 but a location convenient for the user.

In detail, the single pair of force detection sensors includes the left force detection sensor 121 configured to detect a force transferred to the left end of the grip 130 and the right force detection sensor 122 configured to detect a force transferred to the right end of the grip 130 from the force applied by the user. Accordingly, in the electric moving vehicle 100, the single pair of force detection sensors including the left and right force detection sensors 121 and 122 is present in a path through which the force applied by the user is transferred, and may detect the force applied by the user. Thus, although the user uses only a single hand without a need to use both hands, the electric moving vehicle 100 may detect the force applied by the user, which enables the user to easily operate the electric moving vehicle 100.

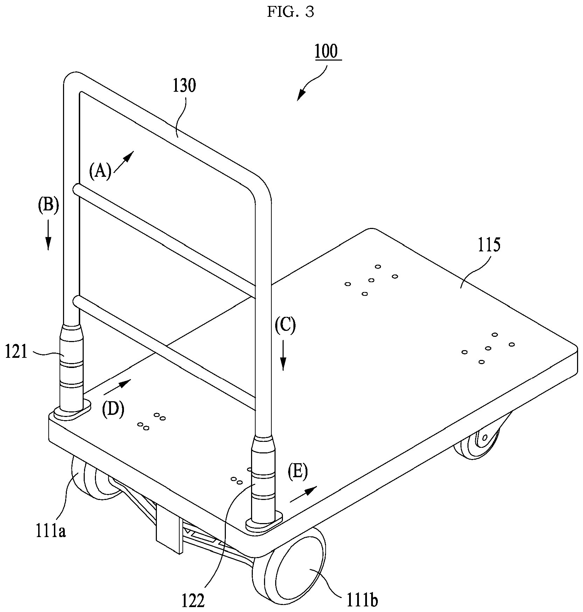

FIG. 3 illustrates an example of a process of transferring a force applied by a user in an electric moving vehicle according to an example embodiment.

Hereinafter, operations of the left and right force detection sensors 121 and 122 are described with reference to FIG. 3.

Referring to FIG. 3, if the user applies a force in a direction, for example, direction (A), in which loaded goods are to be transported with holding the grip 130 using a single hand or both hands, a portion of the force applied by the user may be applied to the left, for example, direction (D), of the body through the left end of the grip 130 and the left force detection sensor 121 (direction (B)). Also, a portion of the force applied by the user may be applied to the right, for example, direction (E), of the body through the right end of the grip 130 and the right force detection sensor 122 (direction (C)).

According to an example embodiment, while maintaining a driving direction of the electric moving vehicle 100 by a force applied by the user to the grip 130 and transferred to the body, the electric moving vehicle 100 may amplify a magnitude of the force transferred to the body and may control operations of the left and right electric motors 112a and 112b to drive the electric moving vehicle 100. Accordingly, although heavy goods are loaded, the user may easily control the electric moving vehicle 100 to move the loaded goods to a desired location.

The electric moving vehicle 100 includes the controller 140 configured to control driving of the left and right electric motors 112a and 112b based on sensing data generated at the left and right force detection sensors 121 and 122. In general, the controller 140 may be provided to the body. However, it is only an example and thus, without being limited thereto, the controller 140 may be provided to, for example, the grip 130. In addition, the controller 140 may be provided at any locations at which the controller 140 may appropriately operate.

While maintaining a driving direction of the electric moving vehicle 100 by a force applied by the user to the grip 130 and transferred to the body, the controller 140 may amplify a magnitude of the force transferred to the body and control the electric motors 112a and 112b. For example, a brushless DC (BLDC) motor may be used for an electric motor, such as the left electric motor 112a and the right electric motor 112b in the electric moving vehicle 100. In addition, any motors that enable the controller 140 to control the electric moving vehicle 100 to appropriately operate may be applied.

Since the controller 140 controls current applied to the left and right electric motors 112a and 112b based on sensing data generated at the left and right force detection sensors 121 and 122, the user may intuitively and easily control the electric moving vehicle 100 to move. Here, if the controller 140 performs a current control in controlling driving of the left and right electric motors 112a and 112b, torque, that is, a rotational force, of the left and right electric motors 112a and 112b may occur to be proportional to the current applied to the left and right electric motors 112a and 112b. Accordingly, the user may easily control the electric moving vehicle 100 to move even using a small amount of force. The controller 140 may use a pulse width modulation (PWM) signal having various duties to control the current applied to the left and right electric motors 112a and 112b. That is, the controller 140 of the electric moving vehicle 100 may effectively control the current applied to the left and right electric motors 112a and 112b using the PWM signal.

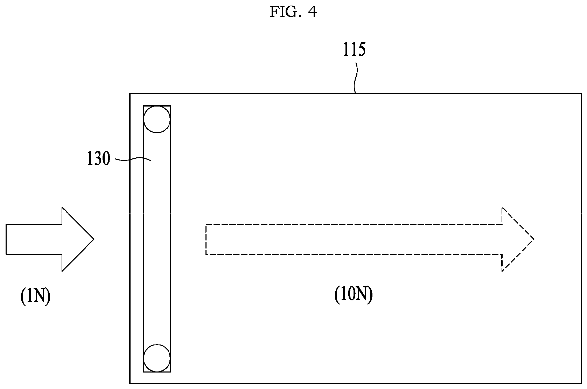

FIGS. 4 through 6 illustrate examples of a process of driving an electric moving vehicle based on a force applied by a user in then electric moving vehicle according to an example embodiment.

Referring to FIG. 4, if the user vertically applies a force to the grip 130 to make the electric moving vehicle 100 move forward, for example, if the user applies a force of 1N, the force applied by the user may be divided into half and a half of the force may be applied to the left of the body through the left end of the grip 130 and the left force detection sensor 121. Also, another half of the force may be applied to the right of the body through the right end of the grip 130 and the right force detection sensor 122. Here, each of the left force detection sensor 121 and the right force detection sensor 122 may detect a force of 0.5N. Accordingly, the controller 140 may amplify a magnitude of the force transferred to the body, that is, amplify the force of 1N to 10 N, while maintaining a driving direction of the electric moving vehicle 100 based on the force, for example, 0.5N, detected at each of the left force detection sensor 121 and the right force detection sensor 122, and may control current that is applied to the left electric motor 112a and the right electric motor 112b. Accordingly, the same magnitude of current may be applied to each of the left electric motor 112a and the right electric motor 112b.

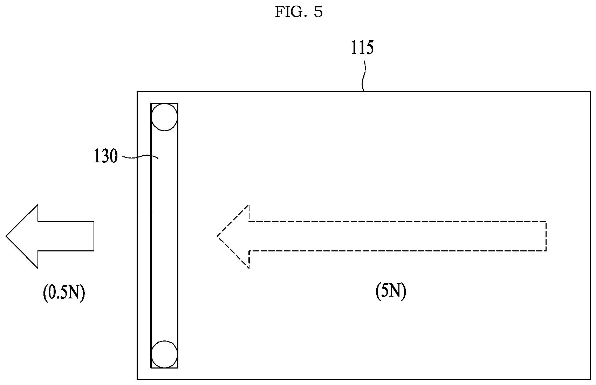

Referring to FIG. 5, if the user applies a force to the grip 130 in a pulling direction to make the electric moving vehicle 100 slowly move backward, for example, if the user applies a force of 0.5N, each of the left force detection sensor 121 and the right force detection sensor 122 may detect a force of 0.25N. Accordingly, the controller 140 may amplify a magnitude of the force transferred to the body, that is, amplify the force of 0.5N to 5N, while maintaining a driving direction of the electric moving vehicle 100 based on the force, for example, 0.25N, detected at each of the left force detection sensor 121 and the right force detection sensor 122, and may control current that is applied to the left electric motor 112a and the right electric motor 112b.

According to an example embodiment, in the case of driving the electric moving vehicle 100 by amplifying a force applied by the user, the force applied by the user may be amplified using various methods, for example, a method of changing an amplification ratio based on an input force and a method of driving the electric moving vehicle 100 based on a preset magnitude of force, instead of applying a preset amplification ratio.

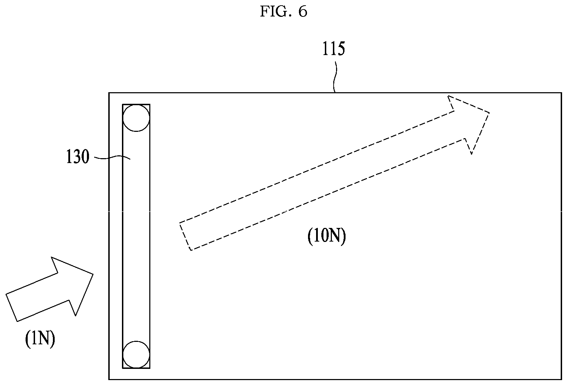

Further, referring to FIG. 6, in the electric moving vehicle 100 according to an example embodiment, although the user applies a force in a direction inclined relative to a forward/backward direction, the controller 140 may amplify a magnitude of the force applied by the user and transferred to the body while maintaining a driving direction of the electric moving vehicle 100 by the force, and may control operations of the left and right electric motors 112a and 112b. Accordingly, the user may steer the electric moving vehicle 100 in a desired direction or may control the electric moving vehicle 100 to move in an intended direction.

In detail, referring to FIG. 6, if the user applies a force to the grip 130 in a desired direction, for example, applies a force of 1N, the force applied by the user may be divided at a predetermined ratio based on a corresponding direction and a portion of the force may be applied to the left of the body through the left end of the grip 130 and the left force detection sensor 121 and a remaining thereof may be applied to the right of the body through the right end of the grip 130 and the right force detection sensor 122. Here, if the left force detection sensor 121 detects a force of a[N] and the right force detection sensor 122 detects a force of b[N], the controller 140 may control current that is to be applied to the left electric motor 112a and the right electric motor 112b based on the force detected at the left force detection sensor 121 and the right force detection sensor 122, respectively.

For example, the controller 140 may control the current of the left electric motor 112a and the right electric motor 112b to amplify the force of a[N] so that a force of 10a[N] may be generated at the left driving wheel 111a and to amplify the force of b[N] so that a force of 10b[N] may be generated at the right driving wheel 111b. The controller 140 may amplify a magnitude of force finally applied by the user and transferred to the body to become 10N while maintaining a driving direction of the electric moving vehicle 100 by the force applied by the user and transferred to the body. Accordingly, the user may steer the electric moving vehicle 100 in a desired direction or may control the electric moving vehicle 100 to move in an intended direction.

The aforementioned electric moving vehicle 100 is provided as an example only. Any type of moving vehicles operating with a battery may be included in an application target of the example embodiment.

Hereinafter, a method and apparatus for safety control of an electric moving vehicle according to example embodiments will be further described.

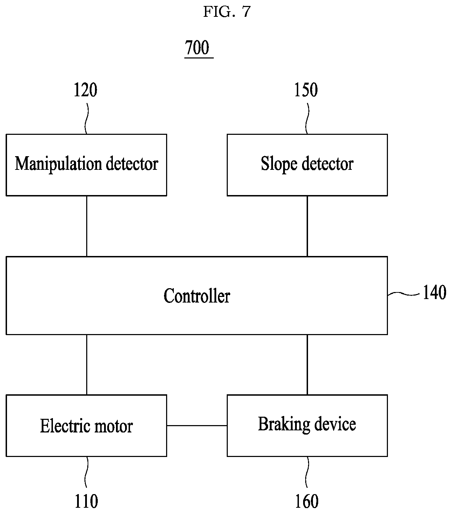

FIG. 7 is a diagram illustrating a configuration of components includable in a safety control apparatus according to an example embodiment.

An electric moving vehicle requires an automatic braking in response to a location control or a speed control when a person, for example, a user is not operating an electric moving vehicle. FIG. 7 illustrates a safety control apparatus 700 for automatic braking of the electric moving vehicle. Here, the safety control apparatus 700 is a configuration included in the electric moving vehicle.

Referring to FIG. 7, the safety control apparatus 700 may include a manipulation detector 120, a slope detector 150, a controller 140, an electric motor 110, and a braking device 160. Depending on example embodiments, the slope detector 150 may be selectively included in or excluded from the safety control apparatus 700.

The manipulation detector 120 detects whether a user manipulation is present based on presence or absence of a user input on the electric moving vehicle. For example, the manipulation detector 120 may include a loadcell, a strain gauge, and the like, and may determine whether the user manipulation is present, that is, may detect presence or absence of the user manipulation based on the presence or absence of the user input by measuring an amount of force applied to the electric moving vehicle using such a sensor. Here, the manipulation detector 120 may correspond to the left/right force detection sensor 121, 122 of FIGS. 1 and 2. As another example, the manipulation detector 120 may be configured as a component separate from the left/right force detection sensor 121, 122. For example, the manipulation detector 120 may be configured by providing a touch sensor on a grip of the electric moving vehicle and may detect the presence or the absence of the user manipulation according to the presence or the absence of the user input based on touch sensing data associated with the grip.

The slope detector 150 may determine whether the electric moving vehicle is located on a slope. Here, the slope detector 150 may include an inertial sensor, and may use various sensors, for example, an acceleration sensor, a gravity sensor, a gyroscope, and a geomagnetic sensor, capable of detecting a change in a gradient of a vehicle body. The slope detector 150 may determine whether the electric moving vehicle is located on a flatland or the slope by detecting a gradient from a reference axis corresponding to a direction of gravity.

The controller 140 of FIG. 7 corresponds to the controller 140 of FIGS. 1 and 2 and the electric motor 110 corresponds to the left/right electric motor 112a, 112b of FIGS. 1 and 2. The controller 140 controls driving of the electric motor 110 based on a force transferred by the user to the electric moving vehicle. In particular, the controller 140 controls braking for the electric motor 110 when the user manipulation for the electric moving vehicle is absent.

Here, the controller 140 may perform the processor functionality of performing basic arithmetic operations, logic operations, and input/output operations, and may be configured to process instructions of a computer program. The instructions may be provided to the controller 140 by way of a memory included as a component of the electric moving vehicle, for example, the electric moving vehicle 100 of FIGS. 1 and 2. For example, the controller 140 may be configured to execute an instruction received according to a program code stored in a storage medium such as the memory.

The braking device 160 refers to a device that stops driving of the electric motor 110, and may apply a softlock or a hardlock on the electric motor 110 under control of the controller 140. Here, the softlock refers to a first level of braking that applies a weak brake in a state in which power consumption is not required and the hardlock refers to a second level of braking that applies a brake with a strong force through power consumption. The softlock applies the brake by short-circuiting a driving circuit of the electric motor 110 without supplying power to the electric motor 110. For example, in the case of using a BLDC motor for the electric motor 110, if three electrodes (UVW 3 wires) of the BLDC motor are short-circuited, a counter electromotive force occurs. Accordingly, a short brake phenomenon (refer to "http://forums.parallax.com/discussion/157445/how-would-you-short-3-wires-of-a-bldc-motor-together") that spinning of wheels, for example, the left/right driving wheel 111a, 111b of FIGS. 1 and 2, connected to the motor stops by a predetermined force may occur. The hardlock may stop spinning of the wheels, for example, the left/right driving wheel 111a, 111b of FIGS. 1 and 2, connected to the electric motor 110 with a forcible force by supplying power to the electric motor 110. For example, the braking device 160 may control a moving speed of the electric motor 110 through energy consumption to reach zero by configuring a feedback loop. As another example, the braking device 160 for the hardlock may include a braking member in which a braking drum and a braking liner couple with each other. Here, the braking drum may be provided on a power transmission shaft connected to the electric motor 110 that provides power for driving the wheels of the electric moving vehicle and the braking liner may be configured to make a contact or no contact with the braking drum. It is provided as an example only. Any braking mechanisms of stopping wheels of the electric moving vehicle with a forcible force by supplying power to the electric motor 110 may be applied.

According to other example embodiments, the safety control apparatus 700 may include a number of components greater than those of FIG. 7. The safety control apparatus 700 may further include an I/O device. For example, an input device may include a device, such as a keyboard and a mouse, and an output device may include a device, such as a display. As another example, the I/O device may be a device for interface with a device in which an input function and an output function are integrated, such as a touchscreen. However, there is no need to clearly illustrate many conventional components.

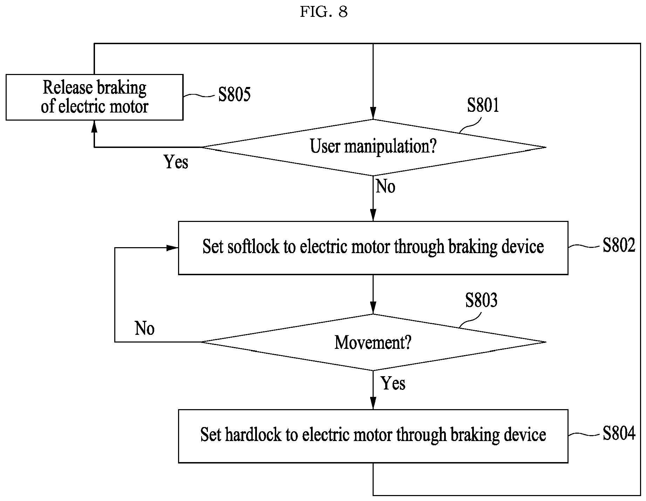

FIG. 8 is a flowchart illustrating an example of a safety control method of an electric moving vehicle performed by a safety control apparatus according to an example embodiment. The safety control method of FIG. 8 may be performed by the controller 140 of the safety control apparatus of FIG. 7.

Referring to FIG. 8, in operation S801, the controller 140 determines whether a user manipulation for an electric moving vehicle is present for example through the manipulation detector 120. That is, the controller 140 determines whether a user is currently manipulating the electric moving vehicle with holding a grip of the electric moving vehicle.

In operation S802, if the user is not manipulating the electric moving vehicle, the controller 140 initially sets a softlock to the electric motor 110 through the braking device 160. Here, the braking device 160 applies a brake on the electric moving vehicle with a force by a short brake phenomenon of the electric motor 110 by short-circuiting a driving circuit of the electric motor 110, instead of supplying current to the electric motor 110.

In operation S803, the controller 140 may determine whether a movement of the electric moving vehicle is present after the softlock is set. The controller 140 may determine whether the electric moving vehicle is still moving based on a movement of wheels or a change in a location of the electric moving vehicle in a state in which the user manipulation is continuously absent while applying the softlock.

In operation S804, if the electric moving vehicle moves even after the softlock is set, the controller 140 may set a hardlock to the electric motor 110 through the braking device 160. Here, the braking device 160 may apply a brake by supplying power required for braking to the electric motor 110 and by configuring a feedback loop so that a moving speed of the electric motor 110 becomes zero, or may stop driving of wheels connected to the electric motor 110 with a forcible force through driving of a braking member.

In operation S805, if the user manipulation is present, that is, if the user is manipulating the electric moving vehicle, the controller 140 may release braking of the electric motor 110 by releasing the softlock or the hardlock through the braking device 160.

As described above, according to example embodiments, the safety control apparatus may apply an automatic braking if the user is not manipulating the electric moving vehicle. That is, the safety control apparatus may apply a brake by initially applying a softlock and then, applying a hardlock if the electric moving vehicle moves even after the softlock is applied.

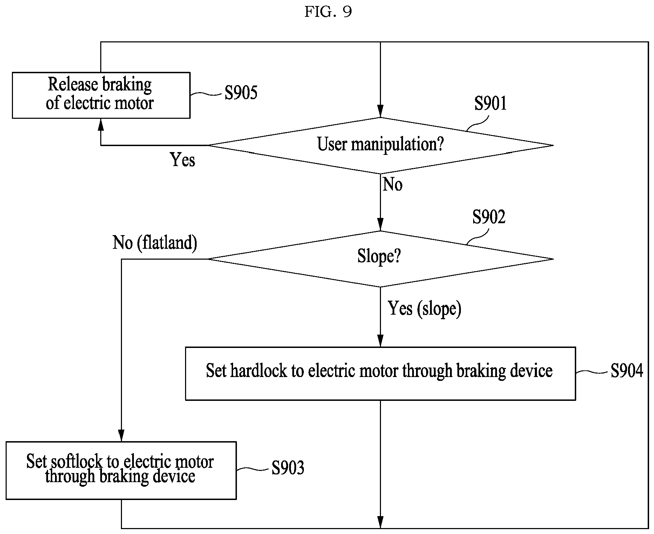

FIG. 9 is a flowchart illustrating another example of a safety control method of an electric moving vehicle performed by a safety control apparatus according to an illustrative example not part of the claimed invention.

The safety control method of FIG. 9 may be performed by the controller 140 of the safety control apparatus of FIG. 7.

Referring to FIG. 9, in operation S901, the controller 140 may determine whether a user manipulation for an electric moving vehicle is present through the manipulation detector 120. That is, the controller 140 may determine whether a user is currently manipulating the electric moving vehicle with holding a grip of the electric moving vehicle.

In operation S902, if the user is not manipulating the electric moving vehicle, the controller 140 may determine whether the electric moving vehicle is located on a slope through the slope detector 150. The controller 140 may determine whether the electric moving vehicle is located on a flatland or the slope in a situation in which the user is not manipulating the electric moving vehicle.

In operation S903, if the electric moving vehicle is determined to be located on the flatland, the controller 140 may set a softlock to the electric motor 110 through the braking device 160. Here, the braking device 160 may apply a brake on the electric moving vehicle with a force by a short brake phenomenon of the electric motor 110 by short-circuiting a driving circuit of the electric motor 110, instead of supplying current to the electric motor 110.

In operation S904, if the electric moving vehicle is determined to be located on the slope, the controller 140 may set a hardlock to the electric motor 110 through the braking device 160. Here, the braking device 160 may apply a brake by supplying power required for braking to the electric motor 110 and by configuring a feedback loop so that a moving speed of the electric motor 110 becomes zero, or may stop driving of wheels connected to the electric motor 110 with a forcible force through driving of a braking member.

In operation S905, if the user manipulation is present, that is, if the user is manipulating the electric moving vehicle, the controller 140 may release braking of the electric motor 110 by releasing the softlock or the hardlock through the braking device 160.

As described above, according to illustrative examples not part of the claimed invention, the safety control apparatus may distinguish a flatland situation from a slope situation when the user is not manipulating the electric moving vehicle and may apply a brake by applying a softlock in the case of the flatland situation and by applying a hardlock in the case of the slope situation.

In detail, the safety control apparatus may apply an automatic braking on the electric moving vehicle when the user is not manipulating the electric moving vehicle. Here, the safety control apparatus may employ a sequential braking scheme of initially applying the softlock without distinguishing the flatland situation and the slope situation, and then applying the hardlock if the electric moving vehicle still moves, or a selective braking scheme of distinguishing the flatland situation and the slope situation, and applying the softlock in the case of the flatland situation and applying the hardlock in the case of the slope situation. If the braking is possible even with the softlock, for example, in the case of the flatland situation, there is no need to supply power for braking. Accordingly, it is possible to reduce an amount of power consumed by the electric moving vehicle.

According to example embodiments, it is possible to enhance an energy efficiency of an electric moving vehicle by effectively controlling an amount of power consumed by a brake for stopping driving of the electric moving vehicle if a user manipulation is absent.

The systems or apparatuses described herein may be implemented using hardware components, software components, and/or a combination thereof. For example, the apparatuses and the components described herein may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will be appreciated that a processing device may include multiple processing elements and/or multiple types of processing elements. For example, a processing device may include multiple processors or a processor and a controller. In addition, different processing configurations are possible, such as parallel processors.

The software may include a computer program, a piece of code, an instruction, or some combination thereof, for independently or collectively instructing or configuring the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. In particular, the software and data may be stored by one or more computer readable storage mediums.

The methods according to the above-described example embodiments may be recorded in non-transitory computer-readable media including program instructions to implement various operations of the above-described example embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tapes; optical media such as CD-ROM discs, and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The above-described devices may be configured to act as one or more software modules in order to perform the operations of the above-described example embodiments, or vice versa.

A number of embodiments and illustrative examples not part of the claimed invention have been described above. Nevertheless, it should be understood that various modifications may be made to the embodiments. For example, suitable results may be achieved if the described techniques are performed in a different order and/or if components in a described system, architecture, device, or circuit are combined in a different manner and/or replaced or supplemented by other components or their equivalents. The scope is determined by the appended claims.

## Claims

1. A safety control method of an electric moving vehicle configured to load goods to be transported or configured as a moving transportation structure on which a person
is boarded, the safety control method comprising:
detecting a force transferred from a user to a body of the vehicle through a grip (130) holdable by the user, wherein the body is configured as a deckboard, wherein the grip (130) is provided at one side of the body, wherein the force is detected by a pair of force detection sensors including a left force detection sensor (121) and a right force detection sensor (122) provided between a lower portion of left and right ends of the grip (130) and an upper portion of the deckboard (115);
determining whether a user manipulation is present or absent based on presence or absence of a user input on the electric moving vehicle, wherein the presence or absence of user input is determined by measuring the detected force or using a touch sensor on the grip of the electric moving vehicle;
in response to the user manipulation determined to be present,
controlling a left electric motor (112a) driving a left driving wheel (111a) based on a force detected by the left force detection sensor (121) and
controlling a right electric motor (112b) driving a right driving wheel (111b) based on a force detected by the right force detection sensor (122); and
braking the electric moving vehicle in response to the user manipulation determined to be absent, wherein the braking comprises applying a softlock scheme to at least one of the left electric motor (112a) and the right electric motor (112b), consisting in short-circuiting an electrode of the electric motor without applying power to the electric motor in response to the user manipulation determined to be absent.

2. The safety control method of claim 1, wherein the softlock scheme uses a short brake phenomenon that a brake with a predetermined force is applied using a counter electromotive force occurring in response to short-circuiting the electrode of the electric motor.

3. The safety control method of claim 1, wherein the braking comprises:
initially applying a softlock scheme to the electric motor in response to the user manipulation determined to be absent; and
applying a hardlock scheme of supplying power required for braking to the electric motor and forcibly braking the electric motor in response to a movement of the electric moving vehicle determined to be present in a state in which the user manipulation is absent while applying the softlock scheme.

4. The safety control method of any of the preceding claims, wherein the braking comprises:
determining whether the electric moving vehicle is located on a flatland or a slope based on a gradient of the electric moving vehicle in response to the user manipulation determined to be absent;
applying the softlock scheme to the electric motor in response to the electric moving vehicle determined to be located on the flatland; and
applying a hardlock scheme of applying power required for braking to the electric motor and forcibly braking the electric motor in response to the electric moving vehicle determined to be located on the slope.

5. The safety control method of claim 3 or 4, wherein the hardlock scheme controls a moving speed of the respective electric motor through energy consumption to reach zero by a feedback loop in the power applied to the electric motor.

6. The safety control method of any of the preceding claims, wherein the force detection sensors include a loadcell or strain gauge

7. The safety control method of any of the preceding claims, wherein the lower portions of the left and right ends of the grip (130) including the force detection sensors (121,122) extend down to the deckboard (115).

8. A safety control apparatus of an electric moving vehicle, the safety control apparatus comprising:
a grip (130) holdable by a user provided at one side of the body of the vehicle;
a body configured as a deckboard (115) for goods to be transported or for boarding a person;
a pair of force detection sensors including a left (121) and a right force detection sensor (122) provided between a lower portion of left and right ends of the grip (130) and an upper portion of the deckboard (115) of the vehicle for loading goods;
a left electric motor (112a) configured to drive a left driving wheel (111a);
a right electric motor (112b) configured to drive a right driving wheel (111b); and
a controller (140) configured to drive the left driving wheel (111a) based on a force detected by the left force detection sensor (121), to drive the right driving wheel (111b) based on a force detected by the right force detection sensor (122), and to brake the electric moving vehicle in response to user input determined to be absent, wherein the presence or absence of user input is determined by measuring the detected force or using a touch sensor on the grip of the electric moving vehicle, wherein the braking comprises applying a softlock scheme to at least one of the left electric motor (112a) and the right electric motor (112b), consisting in short-circuiting an electrode of the electric motor without applying power to the electric motor in response to the user manipulation determined to be absent.

9. The safety control apparatus of claim 8, wherein the softlock scheme uses a short brake phenomenon that a brake with a predetermined force is applied using a counter electromotive force occurring in response to short-circuiting the electrode of the electric motor.

10. The safety control apparatus of claim 8, wherein the controller is configured to
initially apply a softlock scheme to the electric motor in response to the user manipulation determined to be absent, and
applying a hardlock scheme of supplying power required for braking to the electric motor and forcibly braking the electric motor in response to a movement of the electric moving vehicle determined to be present in a state in which the user manipulation is absent while applying the softlock scheme.

11. The safety control apparatus of any of claims 8-10, further comprising:
a slope detector configured to determine whether the electric moving vehicle is located on a flatland or a slope based on a gradient of the electric moving vehicle in response to the user manipulation determined to be absent,
wherein the controller is configured to
apply the softlock scheme to the electric motor in response to the electric moving vehicle determined to be located on the flatland, and
apply a hardlock scheme of applying the power required for braking to the electric motor and forcibly braking the electric motor in response to the electric moving vehicle determined to be located on the slope.

12. The safety control apparatus of claim 10 or 11, wherein the hardlock scheme controls a moving speed of the electric motor through energy consumption to reach zero by a feedback loop in the power applied to the electric motor.

13. The safety control apparatus of any of claims 8 - 12, wherein the force detection sensors include a loadcell or strain gauge.

14. The safety control apparatus of claims 13, wherein lower portions of the left and right ends of the grip (130) including the force detection sensors (121,122) extend down to the deckboard (115).

15. A non-transitory computer-readable media storing instructions that, when executed by the apparatus according to any of claims 8-14, cause the apparatus to perform the method according to any of claims 1-7.

## Patentansprüche

1. Sicherheitskontrollverfahren eines sich elektrisch bewegenden Fahrzeugs, das konfiguriert ist, um zu transportierende Güter zu laden oder als fahrende Transportstruktur konfiguriert ist, auf der eine Person verortet ist, wobei das Sicherheitskontrollverfahren umfasst:
Erfassen einer Kraft, die von einem Benutzer auf eine Karosserie des Fahrzeugs durch einen Griff (130) übertragen wird, der von dem Benutzer gehalten werden kann, wobei die Karosserie als eine Ladefläche konfiguriert ist, wobei der Griff (130) an einer Seite der Karosserie vorgesehen ist, wobei die Kraft erfasst wird durch ein Paar von Krafterfassungssensoren, die einen linken Krafterfassungssensor (121) und einen rechten Krafterfassungssensor (122) aufweisen, die zwischen einem unteren Teil des linken und des rechten Endes des Griffs (130) und einem oberen Teil der Ladefläche (115) vorgesehen sind;
Feststellung, ob eine Benutzermanipulation vorhanden oder nicht vorhanden ist, auf Grundlage des Vorhandenseins oder Nichtvorhandenseins einer Benutzereingabe an das sich elektrisch bewegende Fahrzeug, wobei das Vorhandensein oder Nichtvorhandensein der Benutzereingabe durch Messen der erfassten Kraft oder unter Verwendung eines Berührungssensors am Griff des elektrisch fahrenden Fahrzeuges bestimmt wird;
als Reaktion auf die festgestellte Benutzermanipulation,
Steuerung eines linken Elektromotors (112a), der ein linkes Antriebsrad (111a) antreibt, auf Grundlage einer von dem linken Krafterfassungssensor (121) erfassten Kraft und
Steuerung eines rechten Elektromotors (112b), der ein rechtes Antriebsrad (111b) antreibt, auf Grundlage einer von dem rechten Krafterfassungssensor (122) erfassten Kraft; und
Abbremsen des sich elektrisch bewegenden Fahrzeugs als Reaktion auf die als abwesend ermittelte Benutzermanipulation, wobei das Abbremsen die Anwendung eines Softlock-Schemas auf den linken Elektromotor (112a) und/oder den rechten Elektromotor (112b) umfasst, das darin besteht, dass eine Elektrode des Elektromotors kurzgeschlossen wird, ohne dass der Elektromotor mit Strom versorgt wird, als Reaktion auf die als abwesend ermittelte Benutzermanipulation.

2. Sicherheitskontrollverfahren nach Anspruch 1, wobei das Softlock-Schema ein Kurzbrems-Phänomen verwendet, bei dem eine Bremse mit einer vorbestimmten Kraft unter Verwendung einer gegenelektromotorischen Kraft als Reaktion auf das Kurzschließen der Elektrode des Elektromotors angewendet wird.

3. Sicherheitskontrollverfahren nach Anspruch 1, wobei das Abbremsen umfasst:
anfängliche Anwendung eines Softlock-Schemas auf den Elektromotor als Reaktion auf die als abwesend ermittelte Benutzermanipulation; und
Anwendung eines Hardlock-Schemas, bei dem der Elektromotor mit dem zum Abbremsen erforderlichen Strom versorgt wird, und zwangsweise der Elektromotor als Reaktion auf eine Bewegung des sich elektrisch bewegenden Fahrzeugs, die in einem Zustand festgestellt wird, in dem die Benutzermanipulation während der Anwendung des Softlock-Schemas nicht vorhanden ist, abgebremst wird.

4. Sicherheitskontrollverfahren nach einem der vorhergehenden Ansprüche, wobei das Abbremsen umfasst:
Bestimmung, ob sich das sich elektrisch bewegende Fahrzeug auf ebener Fläche oder einer schrägen Fläche befindet, auf Grundlage einer Neigung des sich elektrisch bewegenden Fahrzeugs als Reaktion auf die als abwesend ermittelte Benutzermanipulation;
Anwendung des Softlock-Schemas auf den Elektromotor als Reaktion auf die Feststellung, dass sich das sich elektrisch bewegende Fahrzeug auf ebener Fläche befindet; und
Anwendung eines Hardlock-Schemas, bei dem dem Elektromotor der zum Abbremsen erforderliche Strom zugeführt wird, und zwangsweises Abbremsen des Elektromotors als Reaktion auf die Feststellung, dass sich das sich elektrisch bewegende Fahrzeug auf einer schrägen Fläche befindet.

5. Sicherheitskontrollverfahren nach Anspruch 3 oder 4, wobei das Hardlock-Schema eine Bewegungsgeschwindigkeit des jeweiligen Elektromotors durch Energieverbrauch so steuert, dass durch eine Rückkopplungsschleife bei dem dem Elektromotor zugeführtem Strom Null erreicht wird.

6. Sicherheitskontrollverfahren nach einem der vorhergehenden Ansprüche, wobei die Krafterfassungssensoren eine Kraftmesszelle oder einen Dehnungsmesser umfassen.

7. Sicherheitskontrollverfahren nach einem der vorhergehenden Ansprüche, wobei die unteren Abschnitte des linken und des rechten Endes des Griffs (130) einschließlich der Krafterfassungssensoren (121, 122) sich bis zur Ladefläche (115) hinunter erstrecken.

8. Sicherheitskontrollvorrichtung für ein sich elektrisch bewegendes Fahrzeug, wobei die Sicherheitskontrollvorrichtung umfasst:
einen vom Benutzer zu haltenden Griff (130), der an einer Seite der Karosserie des Fahrzeugs angebracht ist;
eine als Ladefläche (115) ausgebildete Karosserie für zu transportierende Güter oder zur Verortung einer Person;
ein Paar Krafterfassungssensoren mit einem linken (121) und einem rechten Krafterfassungssensor (122), der jeweils zwischen einem unteren Teil des linken und rechten Endes des Griffs (130) und einem oberen Teil der Ladefläche (115) des Fahrzeugs zum Laden von Gütern vorgesehen ist;
einen linken Elektromotor (112a), der zum Antrieb eines linken Antriebsrads (111a) konfiguriert ist;
einen rechten Elektromotor (112b), der zum Antrieb eines rechten Antriebsrads (111b) konfiguriert ist; und
einen Controller (140), der konfiguriert ist, um das linke Antriebsrad (111a) auf Grundlage einer von dem linken Krafterfassungssensor (121) erfassten Kraft anzutreiben, das rechte Antriebsrad (111b) auf Grundlage einer von dem rechten Krafterfassungssensor (122) erfassten Kraft anzutreiben und das sich elektrisch bewegende Fahrzeug in Reaktion auf eine als abwesend ermitteltet Benutzereingabe abzubremsen, wobei das Vorhandensein oder das Nichtvorhandensein einer Benutzereingabe bestimmt wird durch das Messen der festgestellten Kraft oder unter Verwendung eines Berührungssensors am Griff des sich elektrisch bewegenden Fahrzeugs, wobei das Abbremsen die Anwendung eines Softlock-Schemas auf den linken Elektromotor (112a) und/oder den rechten Elektromotor (112b) umfasst, das darin besteht, dass eine Elektrode des Elektromotors kurzgeschlossen wird, ohne dass der Elektromotor mit Strom versorgt wird, als Reaktion auf die als abwesend ermittelte Benutzermanipulation.

9. Sicherheitskontrollvorrichtung nach Anspruch 8, wobei das Softlock-Schema ein Kurzbrems-Phänomen verwendet, bei dem eine Bremse mit einer vorbestimmten Kraft unter Verwendung einer gegenelektromotorischen Kraft als Reaktion auf das Kurzschließen der Elektrode des Elektromotors angewendet wird.

10. Sicherheitskontrollvorrichtung nach Anspruch 8, wobei der Controller so konfiguriert ist, dass er
anfänglich ein Softlock-Schema auf den Elektromotor als Reaktion auf die als abwesend ermittelte Benutzermanipulation anwendet, und
ein Hardlock-Schema anwendet, bei dem der Elektromotor mit dem zum Abbremsen erforderlichen Strom versorgt wird, und zwangsweise der Elektromotor als Reaktion auf eine Bewegung des sich elektrisch bewegenden Fahrzeugs, die in einem Zustand festgestellt wird, in dem die Benutzermanipulation während der Anwendung des Softlock-Schemas nicht vorhanden ist, abgebremst wird.

11. Sicherheitskontrollvorrichtung nach einem der Ansprüche 8 bis 10, ferner umfassend:
einen Neigungsdetektor, der so konfiguriert ist, dass er als Reaktion auf die als abwesend ermittelte Benutzermanipulation bestimmt, ob sich das sich elektrisch bewegende Fahrzeug auf einer ebenen Fläche oder auf einer schrägen Fläche befindet
wobei der Controller so konfiguriert ist, dass er
das Softlock-Schema auf den Elektromotor anwendet, als Reaktion auf die Feststellung, dass sich das sich elektrisch bewegende Fahrzeug auf ebener Fläche befindet, und
ein Hardlock-Schema anwendet, bei dem dem Elektromotor der zum Abbremsen erforderliche Strom zugeführt wird und der Elektromotor zwangsweise abgebremst wird, als Reaktion auf die Feststellung, dass sich das sich elektrisch bewegende Fahrzeug auf der schrägen Ebene befindet.

12. Sicherheitskontrollvorrichtung nach Anspruch 10 oder 11, wobei das Hardlock-Schema die Bewegungsgeschwindigkeit des Elektromotors durch Energieverbrauch so steuert, dass durch eine Rückkopplungsschleife bei dem dem Elektromotor zugeführtem Strom Null erreicht wird.

13. Sicherheitskontrollvorrichtung nach einem der Ansprüche 8 bis 12, wobei die Kraftermessungssensoren eine Kraftmesszelle oder einen Dehnungsmesser umfassen.

14. Sicherheitskontrollvorrichtung nach Anspruch 13, wobei die unteren Abschnitte des linken und rechten Endes des Griffs (130), einschließlich der Kraftermessungssensoren (121, 122), bis zur Ladefläche (115) hinunter reichen.

15. Nicht-transitorisches Medium, das Anweisungen speichert, die, wenn sie von der Vorrichtung nach einem der Ansprüche 8 bis 14 ausgeführt werden, die Vorrichtung veranlassen, das Verfahren nach einem der Ansprüche 1 bis 7 durchzuführen.

## Revendications

1. Procédé de contrôle de sécurité d'un véhicule de transportation électrique configuré pour charger des marchandises à transporter ou configuré comme une structure de transport mobile sur laquelle est embarquée une personne, le procédé de contrôle de sécurité comprenant les étapes consistant à :
détecter une force transférée d'un utilisateur à un châssis du véhicule par l'intermédiaire d'une poignée (130) pouvant être tenue par l'utilisateur, le châssis étant configuré comme une plate-forme, la poignée (130) étant prévue sur un côté du châssis, dans lequel la force est détectée par une paire de capteurs de détection de force comprenant un capteur de détection de force gauche (121) et un capteur de détection de force droit (122) disposés entre une partie inférieure des extrémités gauche et droite de la poignée (130) et une partie supérieure de la plate-forme (115) ;
déterminer si une manipulation d'utilisateur est présente ou absente sur la base de la présence ou de l'absence d'une entrée d'utilisateur sur le véhicule de transportation électrique, la présence ou l'absence d'entrée d'utilisateur étant déterminée en mesurant la force détectée ou en utilisant un capteur tactile sur la poignée du véhicule de transportation électrique;
en réponse à la manipulation de la part de l'utilisateur déterminée comme étant présente, les étapes consistant à :
commander un moteur électrique gauche (112a) entraînant une roue motrice gauche (111a) sur la base d'une force détectée par le capteur de détection de force gauche (121) et
commander un moteur électrique droit (112b) entraînant une roue motrice droite (111b) sur la base d'une force détectée par le capteur de détection de force droite (122);
et
freiner le véhicule de transportation électrique en réponse à la manipulation de la part de l'utilisateur déterminée comme étant absente, le freinage comprenant l'application d'un système de verrouillage en douceur à au moins l'un parmi le moteur électrique gauche (112a) et le moteur électrique droit (112b), consistant à court-circuiter une électrode du moteur électrique sans appliquer de l'énergie au moteur électrique en réponse à la manipulation de la part de l'utilisateur déterminée comme étant absente.

2. Procédé de contrôle de sécurité selon la revendication 1, dans lequel le système de verrouillage en douceur utilise un phénomène de freinage court-circuit selon lequel un frein avec une force prédéterminée est appliqué en utilisant une force contre-électromotrice se produisant en réponse au court-circuit de l'électrode du moteur électrique.

3. Procédé de contrôle de sécurité selon la revendication 1, dans lequel le freinage comprend les étapes consistant à :
appliquer initialement un schéma de verrouillage en douceur au moteur électrique en réponse à la manipulation de la part de l'utilisateur déterminée comme étant absente ; et
appliquer un schéma de verrouillage de force consistant à fournir l'énergie requise pour le freinage au moteur électrique et freiner de force le moteur électrique en réponse à un mouvement du fait que le véhicule de transportation électrique est déterminé comme étant présent dans un état dans lequel la manipulation de la part de l'utilisateur est absente lors de l'application du schéma de verrouillage en douceur.

4. Procédé de contrôle de sécurité selon l'une quelconque des revendications précédentes, dans lequel le freinage comprend les étapes consistant à :
déterminer si le véhicule de transportation électrique est situé sur un terrain plat ou sur une pente sur la base d'une pente du véhicule de transportation électrique en réponse à la manipulation de la part de l'utilisateur déterminée comme étant absente ;
appliquer le système de verrouillage en douceur au moteur électrique en réponse au fait que le véhicule de transportation électrique est déterminé comme étant situé sur le terrain plat ; et
appliquer un système de verrouillage de force consistant à appliquer de l'énergie requise pour le freinage au moteur électrique et à freiner de force le moteur électrique en réponse au fait que le véhicule de transportation électrique est déterminé comme étant situé sur la pente.

5. Procédé de contrôle de sécurité selon la revendication 3 ou 4, dans lequel le système de verrouillage de force contrôle une vitesse de déplacement du moteur électrique respectif via la consommation d'énergie pour atteindre zéro par une boucle de rétroaction dans de l'énergie appliquée au moteur électrique.

6. Procédé de contrôle de sécurité selon l'une quelconque des revendications précédentes, dans lequel les capteurs de détection de force comprennent une cellule de charge ou une jauge de contrainte.

7. Procédé de contrôle de sécurité selon l'une quelconque des revendications précédentes, dans lequel les parties inférieures des extrémités gauche et droite de la poignée (130), y compris les capteurs de détection de force (121, 122), s'étendent jusqu'à la plate-forme (115).

8. Appareil de contrôle de sécurité d'un véhicule de transportation électrique, l'appareil de contrôle de sécurité comprenant :
une poignée (130) pouvant être tenue par un utilisateur, prévue sur un côté du châssis du véhicule ;
un châssis configuré comme une plate-forme (115) pour des marchandises à transporter ou pour embarquer une personne ;
une paire de capteurs de détection de force comprenant un capteur de détection de force gauche (121) et un capteur droit (122) disposés entre une partie inférieure des extrémités gauche et droite de la poignée (130) et une partie supérieure de la plate-forme (115) du véhicule pour charger des marchandises ;
un moteur électrique gauche (112a) configuré pour entraîner une roue motrice gauche (111a) ;
un moteur électrique droit (112b) configuré pour entraîner une roue motrice droite (111b) ;
et un contrôleur (140) configuré pour entraîner la roue motrice gauche (111a) sur la base d'une force détectée par le capteur de détection de force gauche (121), pour entraîner la roue motrice droite (111b) sur la base d'une force détectée par le capteur de détection de force droit (122), et pour freiner le véhicule de transportation électrique en réponse à une entrée de l'utilisateur déterminée comme étant absente, la présence ou l'absence d'entrée de l'utilisateur étant déterminée en mesurant la force détectée ou en utilisant un capteur tactile sur la poignée du véhicule de transportation électrique, le freinage comprenant l'application d'un système de verrouillage en douceur à au moins l'un parmi le moteur électrique gauche (112a) et le moteur électrique droit (112b), consistant à court-circuiter une électrode du moteur électrique sans appliquer de l'énergie au moteur électrique en réponse au fait que la manipulation de la part de l'utilisateur est jugée corne absente.

9. Appareil de contrôle de sécurité selon la revendication 8, dans lequel le système de verrouillage en douceur utilise un phénomène de freinage court-circuit selon lequel un frein avec une force prédéterminée est appliqué en utilisant une force contre-électromotrice se produisant en réponse au court-circuit de l'électrode du moteur électrique.

10. Appareil de contrôle de sécurité selon la revendication 8, dans lequel le contrôleur est configuré pour
appliquer initialement un système de verrouillage en douceur au moteur électrique en réponse à la manipulation de la part de l'utilisateur déterminée comme étant absente, et
appliquer un schéma de verrouillage de force pour fournir l'énergie requise pour le freinage au moteur électrique et freiner de force le moteur électrique en réponse à un mouvement du fait que le véhicule de transportation électrique est déterminé comme étant présent dans un état dans lequel la manipulation de la part de l'utilisateur est absente lors de l'application du schéma de verrouillage en douceur.

11. Appareil de contrôle de sécurité selon l'une quelconque des revendications 8 à 10, comprenant en outre :
un détecteur de pente configuré pour déterminer si le véhicule de transportation électrique est situé sur un terrain plat ou sur une pente sur la base d'une pente du véhicule de transportation électrique en réponse à la manipulation de la part de l'utilisateur déterminée comme étant absente,
dans lequel le contrôleur est configuré pour
appliquer le système de verrouillage en douceur au moteur électrique en réponse au fait que le véhicule de transportation électrique est déterminé comme étant situé sur le terrain plat, et
appliquer un système de verrouillage de force consistant à appliquer de l'énergie requise pour le freinage au moteur électrique et à freiner de force le moteur électrique en réponse au fait que le véhicule de transportation électrique est déterminé comme étant situé sur la pente.

12. Appareil de contrôle de sécurité selon la revendication 10 ou 11, dans lequel le système de verrouillage de force contrôle une vitesse de déplacement du moteur électrique via la consommation d'énergie pour atteindre zéro par une boucle de rétroaction dans de l'énergie appliquée au moteur électrique.

13. Appareil de contrôle de sécurité selon l'une quelconque des revendications 8 à 12, dans lequel les capteurs de détection de force comprennent une cellule de charge ou une jauge de contrainte.

14. Appareil de contrôle de sécurité selon la revendication 13, dans lequel les parties inférieures des extrémités gauche et droite de la poignée (130), comprenant les capteurs de détection de force (121, 122), s'étendent jusqu'à la plate-forme (115).

15. Support non transitoire lisible par ordinateur stockant des instructions qui, lorsqu'elles sont exécutées par l'appareil selon l'une quelconque des revendications 8 à 14, amènent l'appareil à exécuter le procédé selon l'une quelconque des revendications 1 à 7.
